# EUROPEAN PATENT APPLICATION

(11) **EP 4 513 001 A1**
(43) Date of publication of application: **26.02.2025**
(21) Application number: 24196285.1
(22) Date of filing: 23.08.2024
(51) Int. Cl.: F01D 5/22, F01D 5/28, F01D 9/04, F01D 25/06

(54) **GAS TURBINE ENGINE**

(30) Priority: 24.08.2023 US 202318455308
(71) Applicant: RTX Corporation, Farmington, CT 06032 (US)
(72) Inventor: WASSERMAN, David J., Farmington, 06032 (US)
(74) Representative: Dehns

(57) **Abstract**

A gas turbine engine (20) includes first and second CMC vane arc segments (60) arranged about an engine central axis (A). Each of the CMC vane arc segments (60) has a platform (62) and an airfoil section (66) that extends off of the platform (62). The platform (62) defines an axially trailing face (62b), an axially leading face (62a) that is circumferentially offset from the axially trailing face (62b), and first and second circumferential faces (62c, 62d) that extend from the axially trailing face (62b) to the axially leading face (62a). The first circumferential face (62c) of the first CMC vane arc segment (60) interfaces with the second circumferential face (62d) of the second CMC vane arc segment (60). There is at least one friction damper (70) between the first circumferential face (62c) of the first CMC vane arc segment (60) and the second circumferential face (62d) of the second CMC vane arc segment (60).

## Description

### BACKGROUND

A gas turbine engine typically includes a fan section, a compressor section, a combustor section and a turbine section. Air entering the compressor section is compressed and delivered into the combustion section where it is mixed with fuel and ignited to generate a high-pressure and temperature exhaust gas flow. The high-pressure and temperature exhaust gas flow expands through the turbine section to drive the compressor and the fan section. The compressor section may include low and high pressure compressors, and the turbine section may also include low and high pressure turbines.

Airfoils in the turbine section are typically formed of a superalloy and may include thermal barrier coatings to extend temperature capability and lifetime. Ceramic matrix composite ("CMC") materials are also being considered for airfoils. Among other attractive properties, CMCs have high temperature resistance. Despite this attribute, however, there are unique challenges to implementing CMCs in airfoils.

### SUMMARY

A gas turbine engine according to an example of the present disclosure includes first and second ceramic matrix composite (CMC) vane arc segments arranged about an engine central axis. Each of the CMC vane arc segments have a platform and an airfoil section that extends off of the platform. The platform defines an axially trailing face, an axially leading face that is circumferentially offset from the axially trailing face, and first and second circumferential faces that extend from the axially trailing face to the axially leading face. The first circumferential face of the first CMC vane arc segment interfaces with the second circumferential face of the second CMC vane arc segment, and at least one friction damper between the first circumferential face of the first CMC vane arc segment and the second circumferential face of the second CMC vane arc segment.

In a further embodiment of the foregoing embodiment, each of the first and second circumferential faces has first and second face sections that are circumferentially offset from each other and joined by an angled friction face section serving as the at least one friction damper. The angled friction face section of the first circumferential face of the first CMC matrix vane arc segment being in contact with the angled friction face section of the second circumferential face of the second CMC matrix vane arc segment.

In a further embodiment of any of the foregoing embodiments, the airfoil section has a pressure and suction sides. The first circumferential face is on the suction side of the platform, and the angled friction face section of the first circumferential face defines an angle of 10-80° with the engine central axis.

In a further embodiment of any of the foregoing embodiments, the angle is 30-60° with the engine central axis.

In a further embodiment of any of the foregoing embodiments, the angled friction face section of the first circumferential face is forward-facing, and the angled friction face section of the second circumferential face is aft-facing.

In a further embodiment of any of the foregoing embodiments, relative movement between the first and second CMC vane arc segments generates friction from the contact between the angled friction face section of the first circumferential face of the first CMC matrix vane arc segment and the angled friction face section of the second circumferential face of the second CMC matrix vane arc segment.

In a further embodiment of any of the foregoing embodiments, each of the first and second circumferential faces has first and second sets of the first and second face sections and the angled friction face sections.

In a further embodiment of any of the foregoing embodiments, the angled friction face section of the first set is adjacent the axially leading face and the angled friction face section of the second set is adjacent the axially trailing face.

In a further embodiment of any of the foregoing embodiments, the angled friction face section is planar.

In a further embodiment of any of the foregoing embodiments, the at least one friction damper has at least one bumper protruding from the first circumferential face. The at least one bumper of the first CMC vane arc segment contacting the second circumferential face of the second CMC vane arc segment.

In a further embodiment of any of the foregoing embodiments, the at least one bumper is continuous with the platform.

In a further embodiment of any of the foregoing embodiments, the at least one bumper comprises a protuberance.

A further embodiment of any of the foregoing embodiments includes a compressor section, a combustor in fluid communication with the compressor section and a turbine section in fluid communication with the combustor. The turbine section has the first and second CMC vane arc segments.

The present disclosure may include any one or more of the individual features disclosed above and/or below alone or in any combination thereof.

### BRIEF DESCRIPTION OF THE DRAWINGS

The various features and advantages of the present disclosure will become apparent to those skilled in the art from the following detailed description. The drawings that accompany the detailed description can be briefly described as follows.
Figure 1 illustrates a gas turbine engine.
Figure 2 illustrates a vane arc segment of the engine.
Figure 3 illustrates two adjacent vane arc segments that have a friction damper.
Figure 4 illustrates an example in which there are multiple friction dampers.
Figure 5 illustrates an example in which the friction dampers are bumpers on the platform.
Figure 6 illustrates an example of processing of the vane arc segment.

In this disclosure, like reference numerals designate like elements where appropriate and reference numerals with the addition of one-hundred or multiples thereof designate modified elements that are understood to incorporate the same features and benefits of the corresponding elements. Terms such as "first" and "second" used herein are to differentiate that there are two architecturally distinct components or features. Furthermore, the terms "first" and "second" are interchangeable in that a first component or feature could alternatively be termed as the second component or feature, and vice versa.

### DETAILED DESCRIPTION

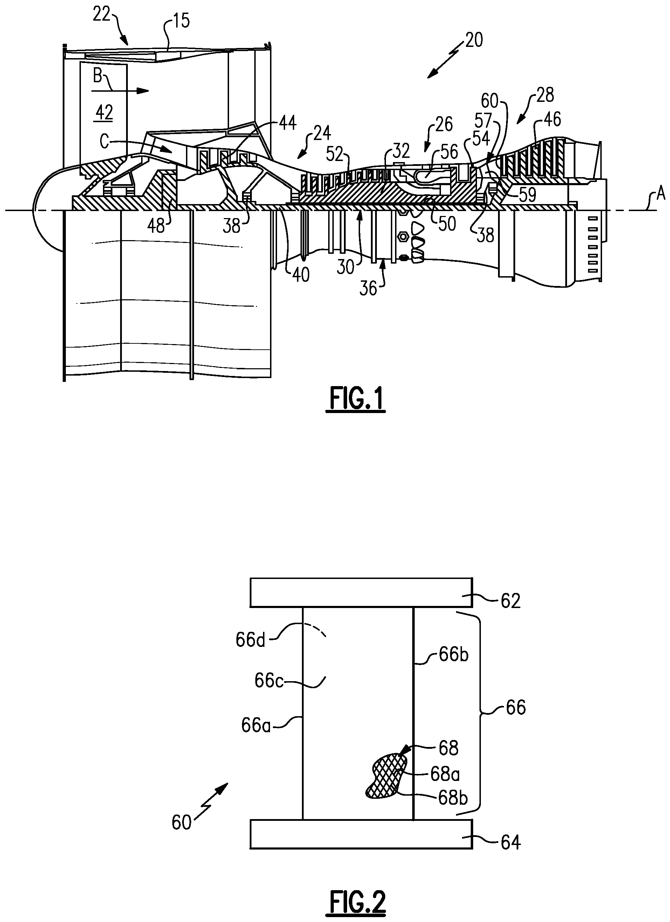

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. The fan section 22 drives air along a bypass flow path B in a bypass duct defined within a housing 15 such as a fan case or nacelle, and also drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects, a first (or low) pressure compressor 44 and a first (or low) pressure turbine 46. The inner shaft 40 is connected to the fan 42 through a speed change mechanism, which in exemplary gas turbine engine 20 is illustrated as a geared architecture 48 to drive a fan 42 at a lower speed than the low speed spool 30. The high speed spool 32 includes an outer shaft 50 that interconnects a second (or high) pressure compressor 52 and a second (or high) pressure turbine 54. A combustor 56 is arranged in the exemplary gas turbine 20 between the high pressure compressor 52 and the high pressure turbine 54. A mid-turbine frame 57 of the engine static structure 36 may be arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded through the high pressure turbine 54 and low pressure turbine 46. The mid-turbine frame 57 includes airfoils 59 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of the low pressure compressor, or aft of the combustor section 26 or even aft of turbine section 28, and fan 42 may be positioned forward or aft of the location of gear system 48.

The engine 20 in one example is a high-bypass geared aircraft engine. In a further example, the engine 20 bypass ratio is greater than about six (6), with an example embodiment being greater than about ten (10), and can be less than or equal to about 18.0, or more narrowly can be less than or equal to 16.0. The geared architecture 48 is an epicyclic gear train, such as a planetary gear system or other gear system, with a gear reduction ratio of greater than about 2.3. The gear reduction ratio may be less than or equal to 4.0. The low pressure turbine 46 has a pressure ratio that is greater than about five. The low pressure turbine pressure ratio can be less than or equal to 13.0, or more narrowly less than or equal to 12.0. In one disclosed embodiment, the engine 20 bypass ratio is greater than about ten (10:1), the fan diameter is significantly larger than that of the low pressure compressor 44, and the low pressure turbine 46 has a pressure ratio that is greater than about five (5:1). Low pressure turbine 46 pressure ratio is pressure measured prior to an inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1 and less than about 5:1. It should be understood, however, that the above parameters are only exemplary of one embodiment of a geared architecture engine and that the present invention is applicable to other gas turbine engines including direct drive turbofans.

A significant amount of thrust is provided by the bypass flow B due to the high bypass ratio. The fan section 22 of the engine 20 is designed for a particular flight condition -- typically cruise at about 0.8 Mach and about 35,000 feet (10,668 meters). The flight condition of 0.8 Mach and 35,000 ft (10,668 meters), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. The engine parameters described above and those in this paragraph are measured at this condition unless otherwise specified. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45, or more narrowly greater than or equal to 1.25. "Low corrected fan tip speed" is the actual fan tip speed in ft/sec divided by an industry standard temperature correction of [(Tram °R) / (518.7 °R)]^{0 5} (where °R = K x 9/5). The "Low corrected fan tip speed" as disclosed herein according to one non-limiting embodiment is less than about 1150.0 ft / second (350.5 meters/second), and can be greater than or equal to 1000.0 ft / second (304.8 meters/second).

Figure 2 illustrates a representative vane arc segment 60 from the turbine section 28 of the engine 20. Multiple vane arc segments 60 are situated in a circumferential row about the engine central axis A. Although the vane arc segments 60 are shown and described with reference to application in the turbine section 28, it is to be understood that the examples herein are also applicable to structural vanes in other sections of the engine 20.

Each vane arc segment 60 is comprised of several sections, including first and second platforms 62/64 and an airfoil section 66 that extends between the platforms 62/64. The airfoil section 66 in this example is hollow and defines a leading end 66a, a trailing end 66b, and pressure and suction sides 66c/66d. In this example, the first platform 62 is a radially outer platform and the second platform 64 is a radially inner platform. It is also contemplated, however, that in modified examples the vane arc segment 60 could alternatively have the first platform 62 as a single platform, with no second platform 64, in which case the single platform may be at either the radially inner or outer end of the airfoil section 66. Terms such as "inner" and "outer" used herein refer to location with respect to the central engine axis A, i.e., radially inner or radially outer. Moreover, the terminology "first" and "second" used herein is to differentiate that there are two architecturally distinct components or features. It is to be further understood that the terms "first" and "second" are interchangeable in that a first component or feature could alternatively be termed as the second component or feature, and vice versa.

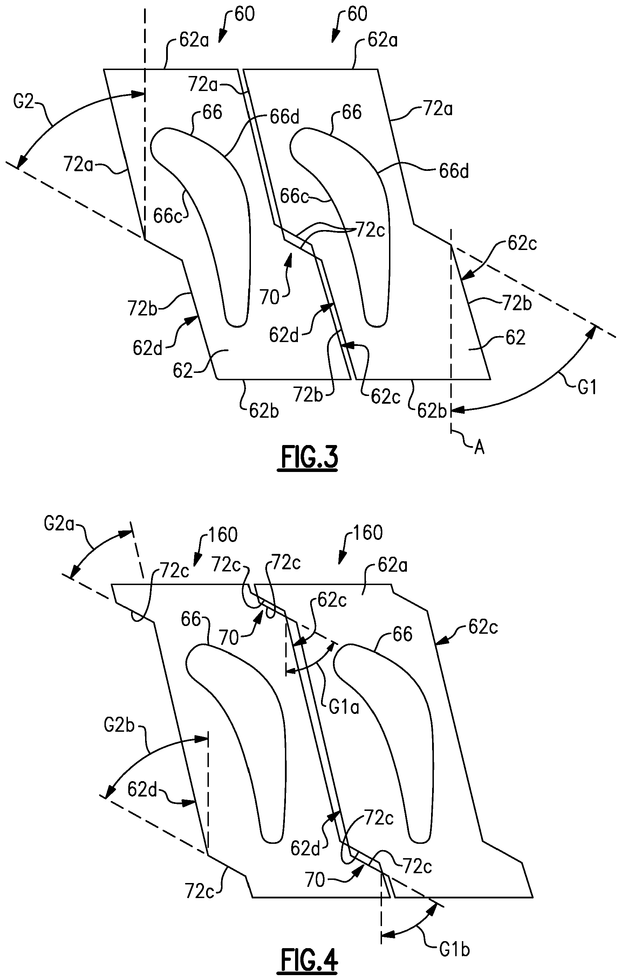

Figure 3 illustrates a radial view of two adjacent vane arc segments 60 from a midspan position along the airfoil sections 66 looking toward the first platforms 62. Although the examples herein are demonstrated with respect to the first platform 62, it is to be understood that the examples are also applicable to the second platform 64. The first platform 62 includes axially leading and trailing faces 62a/62b, and first and second circumferential faces 62c/62d that extend from the axially trailing face 62b to the axially leading face 62a. The axially leading face 62a is circumferentially offset from the axially trailing face 62b (relative to engine central axis A, superimposed in Figure 3). The first circumferential face 62c of the first CMC vane arc segment 60 (left side in Figure 3) interfaces with the second circumferential face 62d of the second, adjacent CMC vane arc segment 60 (right side in Figure 3). Likewise, the first circumferential face 62c of the second CMC vane arc segment 60 (right side in Figure 3) will interface with the circumferential face 62d of the next adjacent CMC vane arc segment (not shown). The term "interface" or variations thereof refers to the location where the faces meet, either in close proximity without contact or with contact.

The vane arc segments 60 are formed of a ceramic matrix composite (CMC) 68. Referring to the cutaway section in Figure 2, the CMC 68 includes ceramic fibers 68a that are disposed in a ceramic matrix 68b. The CMC 68 may be, but is not limited to, a SiC/SiC composite in which SiC fibers are disposed within a SiC matrix. The ceramic fibers 68a are provided in fiber plies that may be woven or braided and may collectively include plies of different fiber weave configurations. For example, the fiber plies are continuous through at least the first platform 62, the airfoil section 66, and the second platform 64.

Gas turbine engine vanes can have many vibratory modes excited within the operating range of the engine. Many of the modes may be tuned via airfoil design to fall outside of the operating range, i.e., tuned out. However, it may not be feasible to tune out all modes, in which case external damping may be desired. To mitigate vibration, metallic vanes can utilize contact with mating hardware or local stiffening features that can be cast during investment casting. CMC vanes, however, have limited contact with mating hardware due structural and thermochemical considerations, and due to manufacturability challenges the addition of local tuning features is often unavailable. Thus, damping for CMC vanes presents a challenge. In this regard, the vane arc segments 60 herein include at least one friction damper 70 between the first circumferential face 62c of the first CMC vane arc segment 60 and the second circumferential face 62d of the second CMC vane arc segment. As the vane arc segments 60 vibrate and move relative to one another, the friction damper 70 generates friction that serves to dissipate the kinetic vibrational energy as thermal energy.

In the illustrated example, each of the first and second circumferential faces 62c/62d has first and second face sections 72a/72b that are generally parallel, circumferentially offset from each other, and joined by an angled friction face section 72c that serves as the friction damper 70. The angled friction face section 72c of the first circumferential face 62c of the first CMC matrix vane arc segment 60 (on the left side) is in contact with the angled friction face section 72c of the second circumferential face 62d of the second CMC matrix vane arc segment 60 (on the right side). That is, there is an interference fit between the vane arc segments 60 such that the angled friction face sections 72c are in contact with each other when assembled in the engine 20. Each of the friction face sections 72c are planar and the sections 72c are thus in areal contact.

In the example shown, the angled friction face section 72c of the first circumferential face 62c is forward-facing, and the angled friction face section 72c of the second circumferential face 62d is aft-facing. The friction face section 72c of the first circumferential face defines an angle (G1) with the engine central axis (A). The angle (G1) is the angle defined between the inside of the plane of the friction face section 72c and the engine axis A. The friction face section 72c of the second circumferential face 62d likewise has an angle (G2) defined between the inside of its plane and the engine axis A. The angles G1 and G2 are substantially equal such that the friction face sections 72c meet face-on-face when the vane arc segments 60 are assembled in the engine 20. The angles G1 and G2 and the amount of interference between friction face sections 72c can be selected to adjust the damping effect, depending on airfoil design and estimated contact force. In one example, the amount of interference is determined based upon a "pretwist" angle, which is the angle between the platform datums and the airfoil datums. The pretwist angle can be adjusted to, in turn, adjust the amount of interference. The pretwist angle is often included within the total shroud angle of the damper surface relative to the airfoil reference datum. A useful range for the angles G1 and G2 is 10-80°, and in a further example the angles G1 and G2 are in the range 30-60°. Shallow angles toward the lower end of the range generate high contact force and may tend to cause the vane arc segments 60 to frictionally lock together, while steep angles toward the higher end of the range generate low contact force may tend reduce effectiveness. In this regard, it is expected that there will be an angular range over which damping is most effective. Given this disclosure, one of ordinary skill in the art will be able to perform design simulations to select the angles for a given design.

Figure 4 illustrates additional example vane arc segments 160, in which each of the first and second circumferential faces 62c/62d has first and second sets of friction dampers 70, each set being comprised of a mating pair of angled friction face sections 72c with respective angles G1a/G1b/G2a/G2b. In general, G1a will be substantially equal to G2a, and G 1 b will be substantially equal to G2b. In a further example, the angles G1a/G1b/G2a/G2b are substantially equal to each other within the range disclosed herein above such that the contact forces are not more concentrated at one or the other of the friction dampers 70.

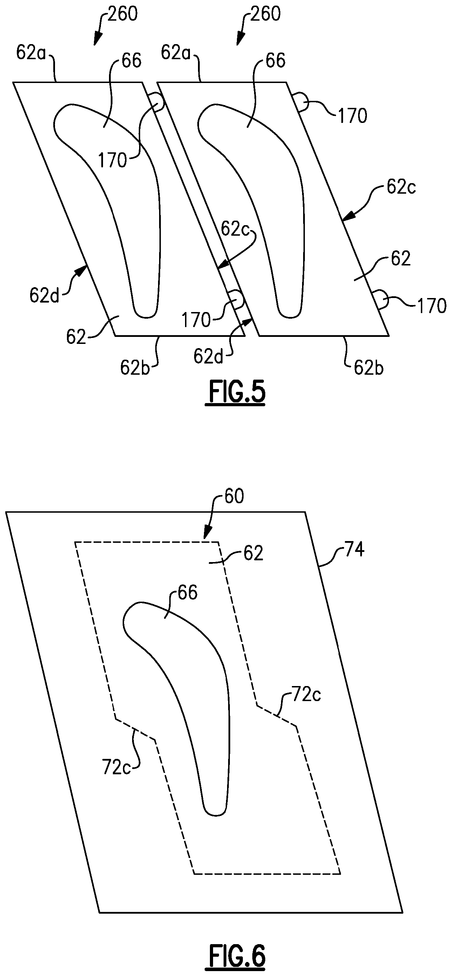

Figure 5 illustrates another example in which vane arc segments 260 include friction dampers 170. As shown, the friction dampers 170 are bumpers that are comprised of protuberances that protrude from the first circumferential face 62c of the platforms 62. In the illustrated example, the protuberances have a circular cross-section, but they could alternatively be polygonal, oval, or stadium in cross-sectional shape. Each bumper is continuous with the platform 62. That is, each bumper is integrally formed with the platform 62 such that there are no seams or mechanical attachments therebetween. The tip ends of the protuberances are in contact with the opposed circumferential face 62d of the adjacent vane arc segment 260 such that, similar to the angled friction face sections 72c, as the vane arc segments 260 vibrate and move relative to one another, the protuberances generate friction that serves to dissipate the kinetic vibrational energy as thermal energy. In that regard, the size, number, and contact area of the protuberances can be selected to adjust the damping effect.

Figure 6 demonstrates an example of fabrication of the vane arc segment 60 (or alternatively 160 or 260). The vane arc segment 60 is initially formed with an oversized platform 74. At a preform stage prior to consolidation with the matrix material, the oversized platform is cut or machined to the desired geometry of the platform 62 to form the angled friction face sections 72c (or protuberances). To the extent that cutting or machining the vane arc segment 60 prior to densification causes ragged fiber edges that are of concern, the segment 60 can alternatively be formed after consolidation with the matrix material, although cutting or machining the CMC at that stage may be more time consuming. The oversized platform 74 enables the angled friction face sections 72c (or protuberances) to be applied to existing airfoil vane arc segment designs, whereby as long as an existing platform design fits within the footprint of the oversized platform 74, it can be re-designed to include the angled friction face sections 72c (or protuberances).

Although a combination of features is shown in the illustrated examples, not all of them need to be combined to realize the benefits of various embodiments of this disclosure. In other words, a system designed according to an embodiment of this disclosure will not necessarily include all of the features shown in any one of the Figures or all of the portions schematically shown in the Figures. Moreover, selected features of one example embodiment may be combined with selected features of other example embodiments.

The preceding description is exemplary rather than limiting in nature. Variations and modifications to the disclosed examples may become apparent to those skilled in the art that do not necessarily depart from this disclosure. The scope of legal protection given to this disclosure can only be determined by studying the following claims.

## Claims

1. A gas turbine engine (20) comprising:
first and second ceramic matrix composite (CMC) vane arc segments (60; 160; 260) arranged about an engine central axis (A), each of the CMC vane arc segments (60; 160; 260) having a platform (62) and an airfoil section (66) extending off of the platform (62), the platform (62) defining an axially trailing face (62b), an axially leading face (62a) that is circumferentially offset from the axially trailing face (62b), and first and second circumferential faces (62c, 62d) extending from the axially trailing face (62b) to the axially leading face (62a), the first circumferential face (62c) of the first CMC vane arc segment (60; 160; 260) interfacing with the second circumferential face (62d) of the second CMC vane arc segment (60; 160; 260), and at least one friction damper (70; 170) between the first circumferential face (62c) of the first CMC vane arc segment (60; 160; 260) and the second circumferential face (62d) of the second CMC vane arc segment (60; 160; 260).

2. The gas turbine engine (20) as recited in claim 1, wherein each of the first and second circumferential faces (62c, 62d) has first and second face sections (72a, 72b) that are circumferentially offset from each other and joined by an angled friction face section (72c) serving as the at least one friction damper (70), the angled friction face section (72c) of the first circumferential face (62c) of the first CMC matrix vane arc segment (60; 160; 260) being in contact with the angled friction face section (72c) of the second circumferential face (62d) of the second CMC matrix vane arc segment (60; 160; 260).

3. The gas turbine engine (20) as recited in claim 2, wherein the airfoil section (66) has a pressure and suction sides (66c, 66d), the first circumferential face (62c) is on the suction side of the platform (62), and the angled friction face section (72c) of the first circumferential face (62c) defines an angle (G1, G2) of 10-80° with the engine central axis (A).

4. The gas turbine engine (20) as recited in claim 3, wherein the angle (G1, G2) is 30-60° with the engine central axis (A).

5. The gas turbine engine (20) as recited in claim 2, 3 or 4, wherein the angled friction face section (72c) of the first circumferential face (62c) is forward-facing, and the angled friction face section (72c) of the second circumferential face (62d) is aft-facing.

6. The gas turbine engine (20) as recited in any of claims 2 to 5, wherein relative movement between the first and second CMC vane arc segments (60; 160; 260) generates friction from the contact between the angled friction face section (72c) of the first circumferential face (62c) of the first CMC matrix vane arc segment (60; 160; 260) and the angled friction face section (72c) of the second circumferential face (62d) of the second CMC matrix vane arc segment (60; 160; 260).

7. The gas turbine engine (20) as recited in any of claims 2 to 6, wherein each of the first and second circumferential faces (62c, 62d) has first and second sets of the first and second face sections (72a, 72b) and the angled friction face sections (72c).

8. The gas turbine engine (20) as recited in claim 7, wherein the angled friction face section (72c) of the first set is adjacent the axially leading face (62a) and the angled friction face section (72c) of the second set is adjacent the axially trailing face (62b).

9. The gas turbine engine (20) as recited in any of claims 2 to 8, wherein the angled friction face section (72c) is planar.

10. The gas turbine engine (20) as recited in any preceding claim, wherein the at least one friction damper (70; 170) includes at least one bumper (170) protruding from the first circumferential face (62c), the at least one bumper (170) of the first CMC vane arc segment (60; 160; 260) contacting the second circumferential face (62d) of the second CMC vane arc segment (60; 160; 260).

11. The gas turbine engine (20) as recited in claim 10, wherein the at least one bumper (170) is continuous with the platform (62).

12. The gas turbine engine (20) as recited in claim 10 or 11, wherein the at least one bumper (170) comprises a protuberance.

13. The gas turbine engine (20) as recited in any preceding claim, comprising:
a compressor section (24);
a combustor (56) in fluid communication with the compressor section (24); and
a turbine section (28) in fluid communication with the combustor (56), the turbine section (28) including the first and second CMC vane arc segments (60; 160; 260).
